# EUROPEAN PATENT SPECIFICATION

(11) **EP 3 505 029 B1**
(45) Date of publication and mention of the grant of the patent: **24.08.2022**
(21) Application number: 17211162.7
(22) Date of filing: 29.12.2017
(51) Int. Cl.: A47K 3/30

(54) **A SHOWER PROFILE**
DUSCHPROFIL
PROFIL DE DOUCHE

(43) Date of publication of application: 03.07.2019
(73) Proprietor: Geberit International AG, 8645 Jona (CH)
(72) Inventor: Mattsson, Martin, 375 34 Mörrum (SE); Randle, Ian, Shropshire, SY2 5LD (GB)
(74) Representative: Ström & Gulliksson AB

(56) References cited:
- WO-A1-96/28077
- FR-A1- 2 498 241

## Description

### Technical Field

The present disclosure relates to a frame structure for a shower, and the invention relates to a shower profile, a shower assembly comprising said shower profile and a method of manufacturing such a shower profile.

### Background

Shower assemblies, such as shower cubicles and shower enclosures, are commonly used when installing a shower to a building. Normally, the shower comprises a frame structure comprising a plurality of profiles extending in a horizontal and vertical direction. In prior art systems, the installation process generally includes assembling shower profiles to each other using external corner profiles. For example patent WO 96/28077 A1 discloses such a shower profile. This frame construction is however not so aesthetically pleasing and the plurality of parts makes the manufacturing process expensive and the installation process difficult.

There is thus a need for an improved frame structure and shower profile that allows for more easier and cheaper installation process while at the same time being more aesthetically pleasing.

### Summary

Accordingly, the present invention preferably seeks to mitigate or eliminate one or more of the above-identified deficiencies in the art singly or in any combination and solves at least the above mentioned problems by providing an improved shower profile.

According to a first aspect, a shower profile for a shower assembly is provided. The shower profile comprises a shower profile comprising a body having two elongated sections and a rounded section, wherein the rounded section connects the two elongated sections with an angle, wherein the rounded section is provided with at least one opening for receiving a corner member, wherein the two elongated sections and the rounded section are provided in one piece.

The rounded section is a continuous rounded section. The angle between the two elongated sections may be between 75 and 110 degrees.

The at least one opening may further be provided for receiving two damping devices in conjunction to the corner member. The two damping devices may each be arranged with fastening means in order to fasten the damping devices to the shower profile and the corner member.

The corner member may comprise a first portion and a second portion. The first portion and the second portion may be connected to each other by a fastening member. In an alternative embodiment, the first portion and the second portion are connected to each other by a snap fit.

In one embodiment, the first portion comprises a first gripping member and a second gripping member arranged to be provided in the at least one opening of the rounded section of the shower profile.

The opening may comprise a through hole and two blind holes. The two blind holes may be extending in the direction of the elongated sections of the profile.

In a second aspect, a method of manufacturing shower profile for a shower assembly is provided. The method comprises the steps of providing an elongate shower body, processing the body such that a notch is formed having an opening and, bending the body around a forming object so that a rounded section is formed. The method may further comprise arranging a corner member in the opening of the rounded section of the profile.

The corner member may comprise a first portion and a second portion and wherein the step of arranging a corner member in the rounded section of the profile comprises connecting the first portion and the second portion to each other by a fastening member.

The method may further comprise arranging two damping devices in conjunction to the corner member. The step of arranging two damping devices in conjunction to the corner member may comprise fastening the damping devices with damping fastening means to the shower profile and the corner member.

In a third aspect, a shower assembly is provided. The shower assembly comprises at least one shower profile according to the first aspect, and at least one corner member.

### Brief Description of Drawings

Further objects, features and advantages will appear from the following detailed description, with reference being made to the accompanying drawings, in which:
Fig. 1 is an isometric side view of a shower assembly according to an embodiment;
Fig. 2a is an isometric side view of a part of a shower assembly from an outside perspective according to an embodiment;
Fig. 2b is an isometric side view of a part of a shower assembly from an inside perspective according to an embodiment;
Fig. 3 is a top view of a shower profile according to an embodiment;
Fig. 4 is a top detailed view of a shower profile according to an embodiment;
Fig. 5 is an isometric side view of a disassembled corner member according to an embodiment;
Fig. 6a is an isometric side view of a frame structure comprising a shower profile and a corner member in a disassembled state according to an embodiment;
Fig. 6b is an isometric side view of a frame structure comprising a shower profile and a corner member in an assembled state according to an embodiment; and
Fig. 7 is a block scheme illustrating a method of manufacturing a shower profile.

### Detailed Description

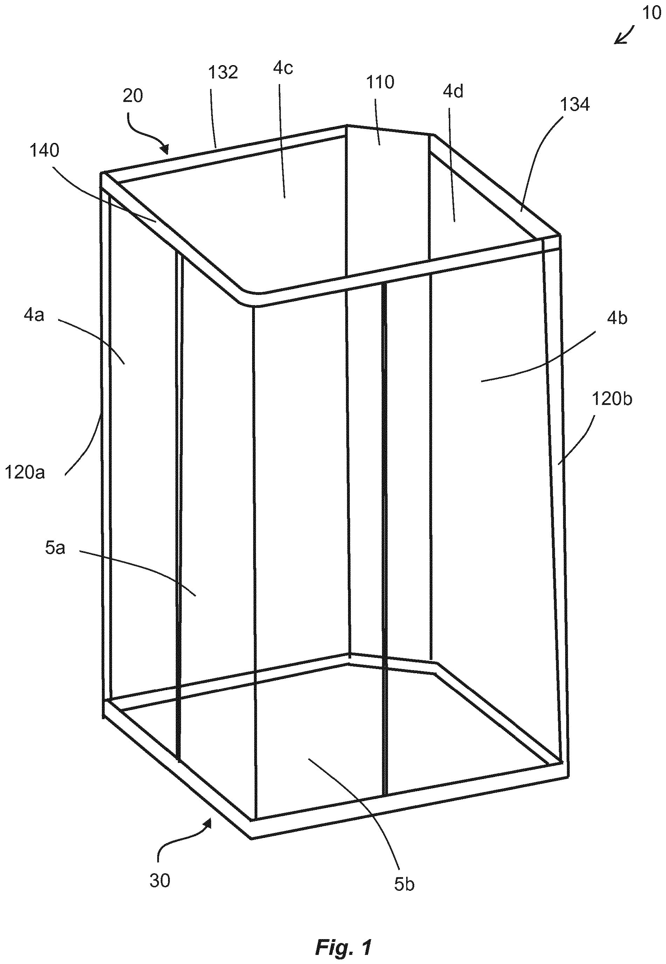

Fig. 1 illustrates a shower assembly 10, in the form of a shower cubicle 10, comprising a top frame 20, a bottom frame30, a column 110, a plurality of vertical interconnecting profiles 120a-b.. The top frame 20 comprises a first top profile 140, a second top profile 132 and a third top profile 134.

In the embodiment shown in Fig. 1, the frame structure comprises two vertical interconnecting profiles 120a-b, however depending on the cross-sectional shape of the shower cubicle 10 other numbers of profiles may be used. The cross-sectional shape of the shower cubicle may for example be in the form of a square, another polygon, a rectangle or pentagonal.

The top frame 20 and the bottom frame 30 are arranged at the upper and lower end of the vertical interconnecting profiles 120a-b, respectively. Hence, the top frame 20 is arranged above the bottom frame, with the interconnecting profiles 120a-b arranged in between in order to create a frame-like structure. The bottom frame 30 may be arranged with a shower tray or bathroom floor.

The column 110 may also be seen as a vertical interconnecting profile. The column 110 extends in a vertical direction to define the vertical extension of the shower cubicle 10. Preferably, the column 110 is provided with suitable connections for supplying water. The column 110 may for example be provided with a water mixing tap whereby the user is allowed to open and close the supply of water, as well as adjusting the desired temperature of the discharged water by applying the correct mix of hot and cold water.

The shower assembly 10 further comprises a plurality of shower panels 4a-d that are extending vertically along the length of the vertical interconnecting profiles 120a-b and column 110 to form an enclosure. In the embodiment shown in Fig. 1, the shower cubicle 10 comprises four shower panels 4a-d and two shower doors 5a-b. However, it should be understood that the number of shower panels 4a-d and shower doors 5a-b depends on the cross-sectional shape of the shower cubical. The shower panels 4a-d are preferably being made of a thin body such as glass, plastic, or similar. The shower panels 4a-d may be fixed panels or doors. The shower doors 5a-b are preferably being made of a thin body such as glass, plastic, or similar.

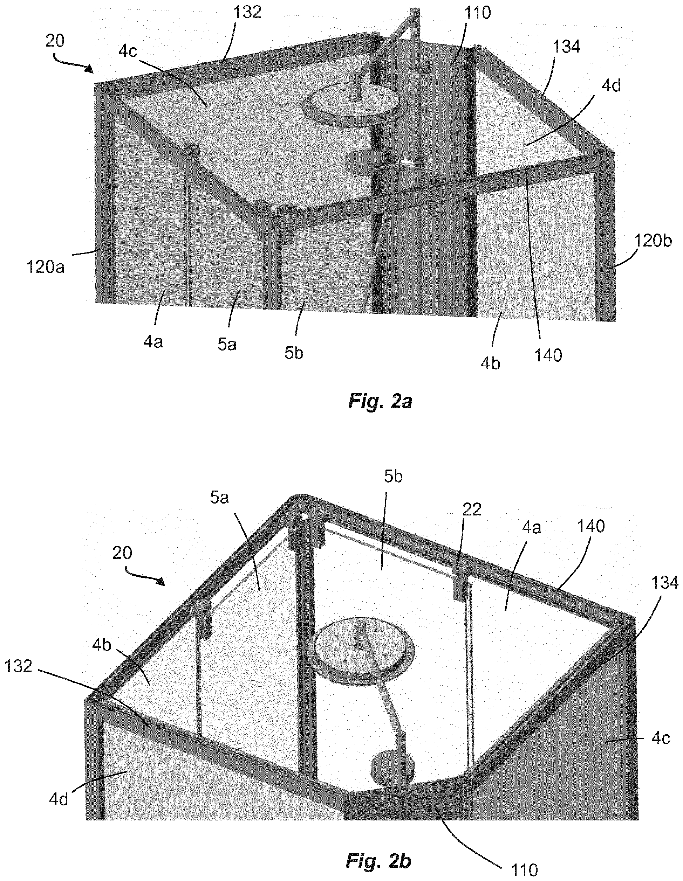

Figs. 2a-b illustrates the top part of the shower cubicle 10, where Fig. 2a is shown from an outside perspective and Fig. 2b is shown from an inside perspective. The shower doors 5a-b are movably supported by the frame structure such that at least one of the shower door 5a-b may be opened and closed. Preferably, the opening and closing may be performed by a sliding movement where the shower door(s) 5a-b are guided in a groove in the frame structure. The shower doors 5a-b are arranged on guide units 22 that are guided in the groove of the first top profile 140 to allow opening and closing of the shower doors 5a-b. Once closed, the shower doors 5a-b should seal against the shower tray or bathroom floor such that water is prevented from escaping out from the shower cubicle 10.

In an alternative embodiment (not shown), the opening and closing may be performed by a pivoting action of the particular shower doors.

In the embodiment shown in Figs. 1-2, the top frame 20 comprises a first top profile 140, a second top profile 132 and a third top profile 134. The second top profile 132 is by one end connected to a first side of the column 110 and at its other end connected to a vertical profile 120a. The third top profile 134 is by one end connected to the second side of the column 110 and at its other end connected to a vertical profile 120b. The first top profile 140 is thus connected to vertical profiles 120a and 120b.

The second top profile 132 and the third top profile 134 are each straight profiles that are known in prior art systems. Although the embodiments shown in Figs. 1-2 shows a shower cubicle 10, it should be understood that the description herein also is applicable to other shower assemblies such as shower enclosures.

The inventors of the present invention have realized, after inventive and insightful reasoning that the frame construction of a shower assembly 10 could be improved by manufacturing and using a novel and inventive first top profile 140, herein after referred to as a shower profile 140 or a front profile 140, as now will be described.

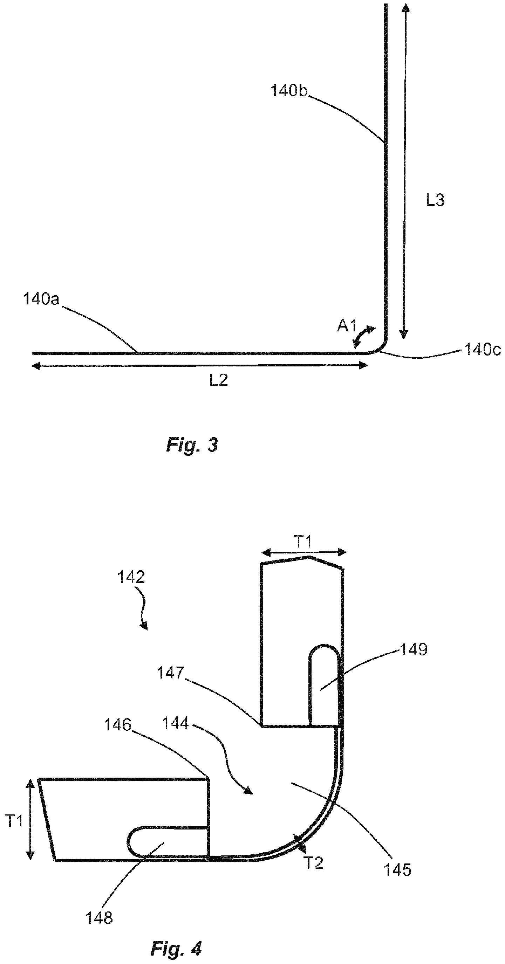

As is shown in Fig. 3, the front profile 140 comprises, in its mounted state, two elongated sections 140a, 140b and one rounded section 140c. The two elongated sections 140a, 140b and the rounded section 140c are provided in one piece and formed as a unit. The front profile 140 thus has a rounded corner section. The rounded corner section is a continuous rounded corner section. The structure of the front profile 140 thus eliminates the need of arranging a separate corner connector in order to generate two elongated sections connected by a rounded corner.. In a preferred embodiment, the elongated sections are straight sections, or sections being mainly straight.

The first elongated section 140a has a length L2 and the second elongated section 140b has a length L3. The lengths L2, L3 of the first and second elongated sections 140a, 140b may be the same or differ from each other. The lengths L2, L3 are preferably each between 60 and 100 cm, and more preferably around 70-90 cm.

The rounded section 140c of the profile 140 is arranged such that it creates a rounded corner between the two elongated sections 140a, 140b. The corner angle A1 between the two elongated sections 140a, 140b are approximately between 75 and 110 degrees. More preferably, the corner angle A1 is around 90 degrees.

The profile 140 comprises a notch 142 , that is a a cut-out, as is more clearly shown in Fig. 4. The notch 142 has an opening 144 defined by first and second edges 146, 147. The notch 142 is formed so as to leave a portion of material, with a thickness T2, of the profile at the edge opposite the opening 144. The thickness T2 is preferably between 1 and 8 mm, and more preferably around 3 mm.

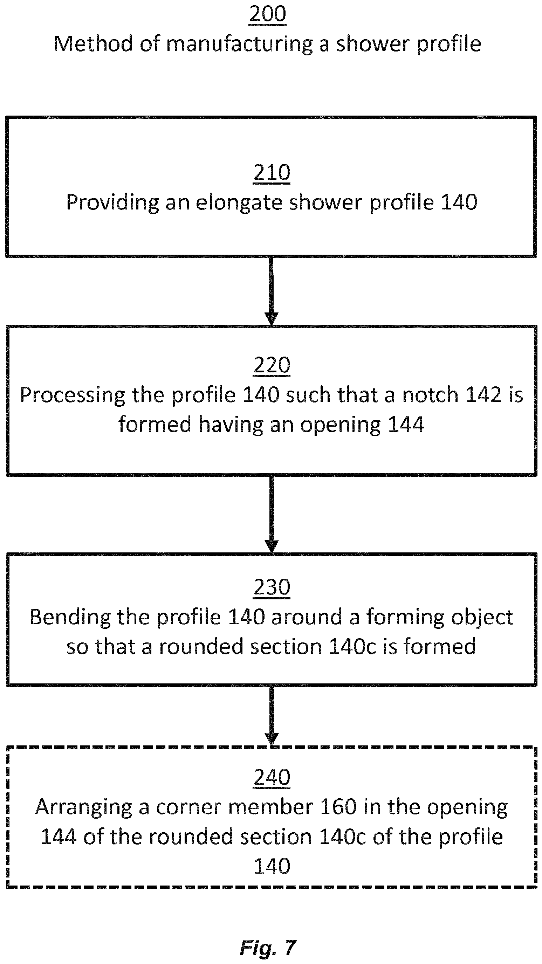

The shape of the opening 144 of the notch 142 is arranged so as to create a soft corner once it is bent during the manufacturing process (as shown and described with reference to Fig. 7). The opening 144 comprises a plurality of holes 145, 148, 149 arranged to receive parts of a corner member 160 as soon will be further described.

In one embodiment, shown in Fig. 4, the opening 144 comprises three holes 145, 148, 149. The hole 145 arranged in between the two other holes 148, 149 are preferably a through hole 145 and two blind holes 148, 149. One blind hole 148, 149 is arranged on each side of the through hole 145. The through hole 145 is thus centrally located in the opening 144. The two blind holes 148, 149 are each individually smaller than the area of the through hole 145. The blind holes 148, 149 are extending in the direction of the elongated sections 140a, 140b of the profile 140.

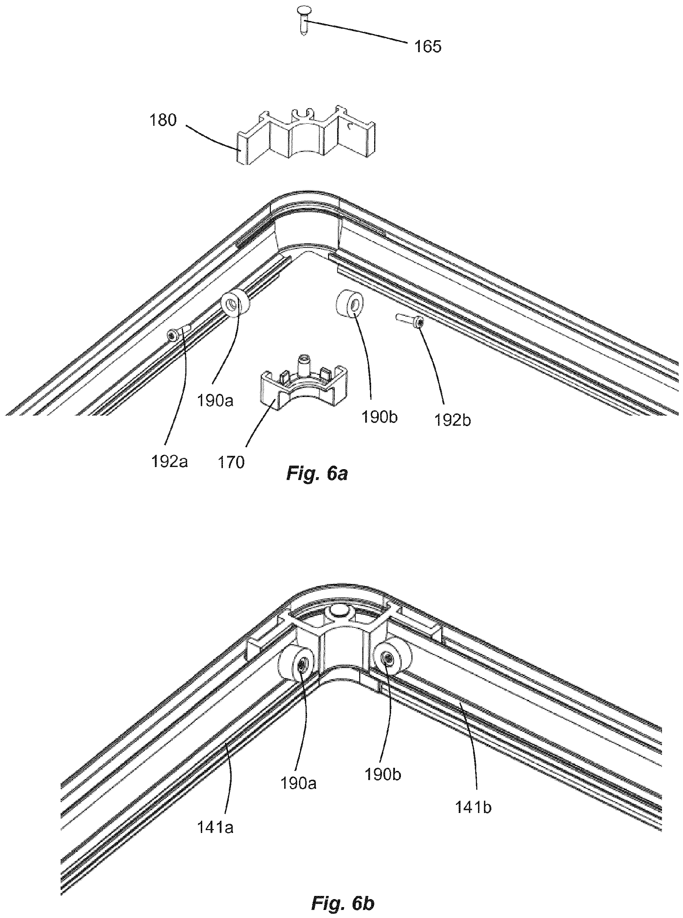

The profile 140 comprises a groove 141a, 141b (see Fig. 6b) extending along the length of the profile 140. The groove 141a, 141b extends along the two elongated sections 140a, 140b of the profile. The groove 141a, 141b allows movement of the at least one shower door 5a-b through the use of guide units 22 guided in the grooves.

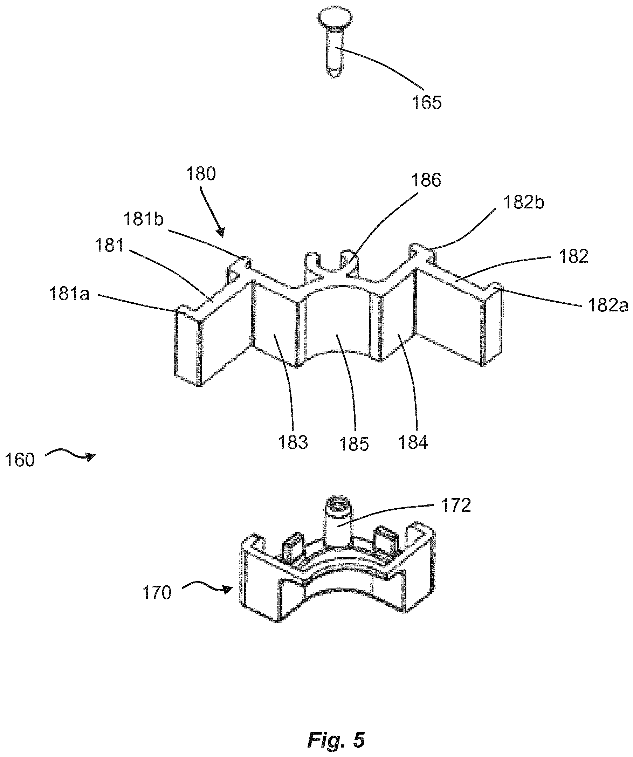

Fig. 5 illustrates a corner member 160 that can be arranged in the profile 140. In Fig. 6a-b, the corner member 160 is arranged in the rounded section 140c of the profile 140.

The corner member 160 comprises a first portion 180 and a second portion 170. The first portion 180 comprises a first gripping member 181 and a second gripping member 182, a first surface 183, a second surface 184, a third surface 185 as well as a first receiving member 186. The first gripping member 181 is arranged on a first side of the first receiving member 186, whereas the second gripping member 182 is arranged on the other, second, side. The first surface 183 is arranged on the first side of the first receiving member 186 and the second surface 184 is arranged on the second side of the first receiving member 186. The third surface 185 is arranged in between the first and the second surface 183, 184 and faces on its one side the first receiving member 186 and on its other side the interior of the shower cubicle to which the corner member 160 of the profile 140 is arranged. The first portion 180 of the corner member 160 is thus symmetrical around the first receiving member 186.

The first portion 180 of the corner member 160 is preferably constructed in the same material as the profile 140, but other materials may also be used. The first portion 180 of the corner member 160 may for example be constructed in aluminum. The first portion 180 of the corner member 160 may be an extruded aluminum profile. In an alternative embodiment the first portion 180 of the corner member 160 is made of a plastic material.

As is shown in Figs. 6a-b, the second portion 170 of the corner member 160 is arranged below the first portion 180. The two portions 170, 180 may be connected, and thus secured to the profile 140, by a fastening member or by snap fitting.

In Figs. 6a-b the two portions 170, 180 are connected to each other by a fastening member. The fastening member may comprise the first receiving member 186, a second receiving member 172 arranged in the second portion 170 of the corner member 160 and a screw or similar 165. The screw 165 is arranged in the first receiving member 186 of the first portion 180 and passed through the profile 140 into the second receiving member 172 arranged in the second portion 170. The two portions 170, 180 of the corner member 160 are thus securely fastened to the profile.

The second portion 170 of the corner member 160 may be constructed in a plastic material. In an alternative embodiment the second portion 170 of the corner member 160 is made of a metal such as aluminum. In an alternative embodiment the first portion 170 and the second portion 180 are constructed by the same material.

The first and the second gripping member 181, 182 are adapted to be arranged in the opening 144 of the profile 140. More specifically, the first and second gripping members 181, 182 are adapted to be arranged in the respective holes 148, 149 (which may be blind holes or through holes as previously described). The shape of the gripping members 181, 182 is thus adapted to be received in the holes 148, 149.

In the embodiment shown in Figs. 5-6, each gripping member 181, 182 comprises a first protruding portion 181a, 182a, and a second protruding portion 181b, 182b. The protruding portions 181a, 181b, 182a, 182b are arranged to engage the holes 144, 148, 149 of the at least one opening 144 of the profile 140.

The first surface 183 and the second surface 184 are arranged such that its first side faces the elongated part of the profile 140, whereas the other, second, side faces the fastening member 186.

The first side of the surfaces 183, 184 are each arranged with a damping or bumper device 190a, 190b. The damping devices 190a, 190b are arranged to stop the at least one shower door 5a-b from clashing into the corner member 160 during closing. The damping devices 190a, 190b are arranged in a material that has a dampening effect. The damping devices 190a, 190b may for example be constructed by a thermoplastic elastomer (TPE).

Each damping device 190a, 190b is arranged with a fastening means 192a, 192b. The fastening means 192a, 192b are arranged to fasten the damping devices 190a, 190b with the profile 140 and the first portion 180 of the corner member 160. The fastening means 192a, 192b may be a screw and a corresponding hole.

The method of forming the profile 140 will now be described with reference to Fig. 7. In a first step 210 an elongated profile is provided having a length. The length is preferably between 1.1 and 2.2 m, and more preferably around 1.6 to 1.8 m. The thickness of the profile 140 is denoted T1. The thickness T1 is preferably between 10 and 40 mm, and more preferably around 25 mm.

As a further step 220, the profile 140 is processed so that a notch 142 or a cut-out is formed in the profile 140. The notch 142 may be arranged at a first distance from a first end of the profile and a second distance from a second end of the profile. The notch 142 may be arranged in the center of the profile 140. However, depending on the cross-sectional shape of the shower assembly 10 the location of the notch 142 may be arranged at different locations on the profile 140.

In the next step 230, the profile 140 is bent into a desired shape. This is done by arranging a forming object inside the opening 144 of the notch 142. Once the bending is completed, the forming object may be removed. The forming object at least partially shapes the corner section and determines the geometry of the corner.

Once the profile 140 is bent around the forming object, the edges of the notch 146, 147 are in effect wrapped towards the forming object. In the final position, the edges 146, 147 of the notch 142 arc preferably arranged with an angle between 75 and 110 degrees between each other. More preferably, the angle is around 90 degrees.

In a next optional step 240, a corner member 160 is arranged in the rounded section 140c of the profile 140. The corner member 160 is fixated to the profile 140 by the fastening member that fixates the two parts 170, 180 of the corner member 160 to the profile 140. Additionally, or alternatively, the corner member 160 is fixated to the profile 140 by fixating the damping devices 190a, 190b to the corner member 160 and the profile 140. The shower profile 140 having the corner member 160 arranged therein can be seen as a frame structure.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

## Claims

1. A shower profile (140) for a shower assembly (10) comprising:
a body having two elongated sections (140a, 140b) and a rounded section (140c), wherein the rounded section (140c) connects the two elongated sections (140a, 140b) with an angle (A1), wherein the rounded section (140c) is a bent section, so as to create a soft corner once it is bent during a manufacturing process, comprising a cut-out (142) having an opening (144) for receiving a corner member (160), said cut-out (142) being defined by first and second edges (146, 147) of the respective first and second elongated sections (140a, 140b), and wherein the two elongated sections (140a, 140b) and the continuous rounded section (140c) are provided in one piece.

2. The shower profile (140) according to claim 1, wherein the angle (A1) between the two elongated sections (140a, 140b) is between 75 and 110 degrees.

3. The shower profile (140) according to any one of the preceding claims, wherein the at least one opening (144) is further provided for receiving two damping devices (190a-b) in conjunction to the corner member (160).

4. The shower profile (140) according to any one of the preceding claims, wherein the corner member (160) comprises a first portion (180) and a second portion (170).

5. The shower profile (140) according to claim 4, wherein the first portion (180) and the second portion (170) are connected to each other by a fastening member.

6. The shower profile (140) according to claim 4, wherein the first portion (180) and the second portion (170) are connected to each other by a snap fit.

7. The shower profile (140) according to any one of claim 4 to 6, wherein the first portion (180) comprises a first gripping member (181) and a second gripping member (182) arranged to be provided in the at least one opening (144) of the rounded section (140c) of the shower profile (140).

8. The shower profile (140) according to any one of the preceding claims, wherein the at least one opening (144) comprises three holes (145, 148, 149).

9. The shower profile (140) according to claim 8, wherein two of the holes (148, 149) are extending in the direction of the elongated sections (140a, 140b) of the profile (140).

10. Method (200) of manufacturing a shower profile according to any of the preceding claims for a shower assembly, comprising the steps of:
providing (210) the elongated body;
processing (220) the body such that a cut-out is formed having at least one opening, said cut-out being defined by first and second edges of the respective first and second elongated sections; and
bending (230) the body around an forming object so that the bent section is formed.

11. The method according to claim 10, further comprising the step of arranging (240) a corner member in the at least one opening of the rounded section of the profile.

12. The method according to claim 10 or 11, wherein the corner member (160) comprises a first portion (180) and a second portion (170) and wherein the step of arranging a corner member (160) in the rounded section (140c) of the profile (140) comprises connecting the first portion (180) and the second portion (170) to each other by a fastening member.

13. The method according to claim 11 or 12, further comprising:
arranging two damping devices (190a-b) in conjunction to the corner member (160).

14. The method according to claim 13, wherein the step of arranging two damping devices (190a-b) in conjunction to the corner member (160) comprises fastening the damping devices (190a-b) with damping fastening means (192a-b) to the shower profile (140) and the corner member (160).

15. A shower assembly comprising at least one shower profile (140) according to any one of the claims 1-9, and at least one corner member (160).

## Patentansprüche

1. Duschprofil (140) für eine Duschanordnung (10), umfassend:
einen Körper mit zwei lang gestreckten Abschnitten (140a, 140b) und einem gerundeten Abschnitt (140c), wobei der gerundete Abschnitt (140c) die zwei lang gestreckten Abschnitte (140a, 140b) mit einem Winkel (A1) verbindet, wobei der gerundete Abschnitt (140c) ein gebogener Abschnitt ist, um eine weiche Ecke zu schaffen, nachdem er während eines Herstellungsprozesses gebogen wird, der eine Ausnehmung (142) mit einer Öffnung (144) zum Aufnehmen eines Eckelements (160) umfasst, wobei die Ausnehmung (142) durch einen ersten und einen zweiten Rand (146, 147) des jeweiligen ersten und zweiten Abschnitts (140a, 140b) definiert ist und wobei die zwei lang gestreckten Abschnitte (140a, 140b) und der durchgehende gerundete Abschnitt (140c) in einem Stück bereitgestellt sind.

2. Duschprofil (140) nach Anspruch 1, wobei der Winkel (A1) zwischen den zwei lang gestreckten Abschnitten (140a, 140b) zwischen 75 und 110 Grad beträgt.

3. Duschprofil (140) nach einem der vorangehenden Ansprüche, wobei die wenigstens eine Öffnung (144) ferner zum Aufnehmen von zwei Dämpfungsvorrichtungen (190a-b) in Verbindung mit dem Eckelement (160) vorgesehen ist.

4. Duschprofil (140) nach einem der vorangehenden Ansprüche, wobei das Eckelement (160) einen ersten Abschnitt (180) und einen zweiten Abschnitt (170) umfasst.

5. Duschprofil (140) nach Anspruch 4, wobei der erste Abschnitt (180) und der zweite Abschnitt (170) durch ein Befestigungselement miteinander verbunden sind.

6. Duschprofil (140) nach Anspruch 4, wobei der erste Abschnitt (180) und der zweite Abschnitt (170) durch eine Rastverbindung miteinander verbunden sind.

7. Duschprofil (140) nach einem der Ansprüche 4 bis 6, wobei der erste Abschnitt (180) ein erstes Greifelement (181) und ein zweites Greifelement (182) umfasst, die dazu angeordnet sind, in der wenigstens einen Öffnung (144) des gerundeten Abschnitts (140c) des Duschprofils (140) vorgesehen zu sein.

8. Duschprofil (140) nach einem der vorangehenden Ansprüche, wobei die wenigstens eine Öffnung (144) drei Löcher (145, 148, 149) umfasst.

9. Duschprofil (140) nach Anspruch 8, wobei zwei der Löcher (148, 149) sich in der Richtung der lang gestreckten Abschnitte (140a, 140b) des Profils (140) erstrecken.

10. Verfahren (200) zur Herstellung eines Duschprofils nach einem der vorangehenden Ansprüche für eine Duschanordnung, folgende Schritte umfassend:
Bereitstellen (210) des lang gestreckten Körpers;
Bearbeiten (220) des Körpers derart, dass eine Ausnehmung mit wenigstens einer Öffnung ausgebildet wird, wobei die Ausnehmung durch einen ersten und einen zweiten Rand des jeweiligen ersten und zweiten lang gestreckten Abschnitts definiert ist; und
Biegen (230) des Körpers um ein Formgebungsobjekt herum, sodass der gebogene Abschnitt ausgebildet wird.

11. Verfahren nach Anspruch 10, ferner folgenden Schritt umfassend:
Anordnen (240) eines Eckelements in der wenigstens einen Öffnung des gerundeten Abschnitts des Profils.

12. Verfahren nach Anspruch 10 oder 11, wobei das Eckelement (160) einen ersten Abschnitt (180) und einen zweiten Abschnitt (170) umfasst und wobei der Schritt des Anordnens eines Eckelements (160) in dem gerundeten Abschnitt (140c) des Profils (140) ein Verbinden des ersten Abschnitts (180) und des zweiten Abschnitts (170) miteinander durch ein Befestigungselement umfasst.

13. Verfahren nach Anspruch 11 oder 12, ferner umfassend:
Anordnen von zwei Dämpfungsvorrichtungen (190a-b) in Verbindung mit dem Eckelement (160).

14. Verfahren nach Anspruch 13, wobei der Schritt des Anordnens von zwei Dämpfungsvorrichtungen (190a-b) in Verbindung mit dem Eckelement (160) ein Befestigen der Dämpfungsvorrichtungen (190a-b) mit Dämpfungsbefestigungsmitteln (192a-b) an dem Duschprofil (140) und dem Eckelement (160) umfasst.

15. Duschanordnung, die wenigstens ein Duschprofil (140) nach einem der Ansprüche 1-9 und wenigstens ein Eckelement (160) umfasst.

## Revendications

1. Profil de douche (140) pour un ensemble de douche (10) comprenant :
un corps ayant deux sections allongées (140a, 140b) et une section arrondie (140c), dans lequel la section arrondie (140c) relie les deux sections allongées (140a, 140b) avec un angle (A1), dans lequel la section arrondie (140c) est une section courbée, de manière à créer un coin doux une fois qu'elle est courbée pendant un procédé de fabrication,
comprenant une découpe (142) ayant une ouverture (144) pour recevoir un élément de coin (160), ladite découpe (142) étant définie par des premier et second bords (146, 147) des première et seconde sections allongées respectives (140a, 140b), et dans lequel les deux sections allongées (140a, 140b) et la section arrondie continue (140c) sont fournies en une seule pièce.

2. Profil de douche (140) selon la revendication 1, dans lequel l'angle (A1) entre les deux sections allongées (140a, 140b) est compris entre 75 et 110 degrés.

3. Profil de douche (140) selon l'une quelconque des revendications précédentes, dans lequel l'au moins une ouverture (144) est en outre prévue pour recevoir deux dispositifs d'amortissement (190a-b) conjointement à l'élément de coin (160).

4. Profil de douche (140) selon l'une quelconque des revendications précédentes, dans lequel l'élément de coin (160) comprend une première partie (180) et une deuxième partie (170).

5. Profil de douche (140) selon la revendication 4, dans lequel la première partie (180) et la deuxième partie (170) sont reliées l'une à l'autre par un élément de fixation.

6. Profil de douche (140) selon la revendication 4, dans lequel la première partie (180) et la seconde partie (170) sont reliées l'une à l'autre par un élément de fixation par pression.

7. Profil de douche (140) selon l'une quelconque des revendications 4 à 6, dans lequel la première partie (180) comprend un premier élément de préhension (181) et un second élément de préhension (182) agencés pour être prévus dans l'au moins une ouverture (144) de la section arrondie (140c) du profil de douche (140).

8. Profil de douche (140) selon l'une quelconque des revendications précédentes, dans lequel l'au moins une ouverture (144) comprend trois trous (145, 148, 149).

9. Profil de douche (140) selon la revendication 8, dans lequel deux des trous (148, 149) s'étendent dans la direction des sections allongées (140a, 140b) du profil (140).

10. Procédé (200) de fabrication d'un profil de douche selon l'une quelconque des revendications précédentes pour un ensemble de douche, comprenant les étapes suivantes :
la fourniture (210) du corps allongé ;
le traitement (220) du corps de telle sorte qu'une découpe soit formée ayant au moins une ouverture, ladite découpe étant définie par les premier et second bords des première et seconde sections allongées respectives ; et
le pliage (230) du corps autour d'un objet de formation de sorte que la section courbée soit formée.

11. Procédé selon la revendication 10, comprenant en outre l'étape d'agencement (240) d'un élément de coin dans la au moins une ouverture de la section arrondie du profil.

12. Procédé selon la revendication 10 ou 11, dans lequel l'élément de coin (160) comprend une première partie (180) et une seconde partie (170) et dans lequel l'étape d'agencement d'un élément de coin (160) dans la section arrondie (140c) du profil (140) comprend la connexion de la première partie (180) et de la seconde partie (170) l'une à l'autre par un élément de fixation.

13. Procédé selon la revendication 11 ou 12, comprenant en outre :
l'agencement de deux dispositifs d'amortissement (190a-b) conjointement à l'élément de coin (160).

14. Procédé selon la revendication 13, dans lequel l'étape consistant à agencer deux dispositifs d'amortissement (190a-b) conjointement à l'élément de coin (160) comprend la fixation des dispositifs d'amortissement (190a-b) avec des moyens de fixation d'amortissement (192a-b) au profil de douche (140) et à l'élément de coin (160).

15. Ensemble de douche comprenant au moins un profil de douche (140) selon l'une quelconque des revendications 1 à 9, et au moins un élément de coin (160).
